(19)
<br>
Europäisches
Patentamt

European
Patent Office

Office européen
des brevets

(11) **EP 3 016 195 A1**

(12) **EUROPEAN PATENT APPLICATION**
published in accordance with Art. 153(4) EPC

(43) Date of publication:
**04.05.2016 Bulletin 2016/18**

(21) Application number: **14818611.7**

(22) Date of filing: **15.04.2014**

(51) Int Cl.:
**H01M 10/052** (2010.01)   **H01M 4/13** (2010.01)
**H01M 4/80** (2006.01)   **H01M 10/0568** (2010.01)

(86) International application number:
**PCT/JP2014/060662**

(87) International publication number:
**WO 2014/208182 (31.12.2014 Gazette 2014/53)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **27.06.2013 JP 2013135360**

(71) Applicant: **Sumitomo Electric Industries, Ltd.
Osaka-shi, Osaka 541-0041 (JP)**

(72) Inventors:
 • **OKUNO, Kazuki
  Itami-shi
  Hyogo 664-0016 (JP)**
 • **HOSOE, Akihisa
  Osaka-shi
  Osaka 554-0024 (JP)**

 • **NISHIMURA, Junichi
  Osaka-shi
  Osaka 554-0024 (JP)**
 • **KIMURA, Koutarou
  Osaka-shi
  Osaka 554-0024 (JP)**
 • **GOTO, Kengo
  Osaka-shi
  Osaka 554-0024 (JP)**
 • **SAKAIDA, Hideaki
  Osaka-shi
  Osaka 554-0024 (JP)**

(74) Representative: **Boult Wade Tennant
Verulam Gardens
70 Gray's Inn Road
London WC1X 8BT (GB)**

(54) **LITHIUM BATTERY**

(57)    It is an object of the present invention to provide a lithium battery having an improved energy density. The present invention relates to a lithium battery including a positive electrode, a negative electrode, a separator interposed between the positive electrode and the negative electrode, and a nonaqueous electrolyte, wherein the positive electrode includes a metal positive electrode current collector having a three-dimensional network hollow skeleton and a positive electrode mixture, which is filled in the positive electrode current collector and which contains a positive electrode active material, the thickness of the positive electrode is 0.2 to 5 mm, the nonaqueous electrolyte contains an ionic liquid and a lithium salt, the ionic liquid is a molten salt of a cation and an anion, and the concentration of the lithium salt in the nonaqueous electrolyte is 0.8 to 6.2 mol/L.

FIG. 3

## Description

Technical Field

The present invention relates to a lithium battery by using a nonaqueous electrolyte containing an ionic liquid and a lithium salt.

Background Art

Environmental problems are getting a great deal of attention and systems in which clean energy, e.g., sunlight or a wind power, is converted to an electric power and is stored as electric energy have been developed actively. As for such electricity storage devices, for example, lithium secondary batteries (metal lithium secondary batteries, lithium ion secondary batteries, and the like) and capacitors (electric double layer capacitors, lithium ion capacitors, and the like) have been studied. Meanwhile, along with enhancement of functionality of various types of equipment, the range of uses for primary batteries, e.g., lithium primary batteries, have also increased.

A common lithium battery includes a positive electrode, a negative electrode, a separator interposed between these electrodes, and a lithium ion conductive organic electrolytic solution. As for the organic electrolytic solution, a solution containing an organic solvent, e.g., a carbonate, and a lithium salt serving as a supporting electrolyte has been used. In the lithium secondary battery, a dendritic lithium metal is deposited easily at a negative electrode during charging and causes internal short-circuit and the like. Also, a deposited lithium metal has very high reactivity and, in addition, the organic solvent exhibits high combustibility and volatility. Therefore, there is an issue of ensuring of the safety.

Then, use of a nonaqueous electrolyte by using an ionic liquid in a lithium battery has been studied. The ionic liquid refers to a salt, which is composed of a cation and an anion and which has fluidity in a molten state, and exhibits low volatility and low combustibility as compared with those of a common nonaqueous solvent (or an organic solvent), e.g., a carbonate, used for a nonaqueous electrolyte. Consequently, in the case where the ionic liquid can be used as a nonaqueous solvent, the safety of the lithium battery is ensured easily.

For example, PTL 1 proposes a lithium secondary battery by using a positive electrode, a negative electrode containing a Si-C composite as a negative electrode active material, and a nonaqueous electrolyte containing an ionic liquid as a nonaqueous solvent and a lithium salt.

Citation List

Patent Literature

PTL 1: Japanese Unexamined Patent Application Publication No. 2010-97922

Summary of Invention

Technical Problem

The lithium secondary battery has a high capacity as compared with a nickel-hydrogen battery and a capacitor, although further increase in capacity has been required in automotive uses and the like. Likewise, the lithium primary battery has been required to have an increased capacity along with enhancement of performance of the equipment. As for the lithium battery, from the viewpoint of an increase in the capacity, a battery is formed by using a group of electrodes obtained by using sheet-shaped electrodes, in which a layer containing an active material is formed on a surface of a sheet-shaped current collector, as a positive electrode and a negative electrode and rolling them or stacking a plurality of layers, while a sheet-shaped separator is interposed between the positive electrode and the negative electrode. In PTL 1 as well, a battery is formed by using such sheet-shaped electrodes.

The thickness of the sheet-shaped electrode is about 200 $\mu$m in the case of a large thickness. If the facing area of the positive electrode and the negative electrode is maximized from the viewpoint of an increase in the output, it is necessary that the area of the separator be increased along with this. That is, in such a battery, the volume made up by the separator not contributing to the battery capacitor increases and this is one of the causes of reduction in the energy density.

Accordingly, it is an object to provide a lithium battery having an improved energy density.

Solution to Problem

An aspect of the present invention relates to a lithium battery including a positive electrode, a negative electrode, a separator interposed between the positive electrode and the negative electrode, and a nonaqueous electrolyte, wherein the positive electrode includes a metal positive electrode current collector having a three-dimensional network hollow skeleton and a positive electrode mixture, which is filled in the positive electrode current collector and which contains a positive electrode active material, the thickness of the positive electrode is 0.2 to 5 mm, the nonaqueous electrolyte contains an ionic liquid and a lithium salt, the ionic liquid is a molten salt of a cation and an anion, and the concentration of the lithium salt in the nonaqueous electrolyte is 0.8 to 6.2 mol/L. Advantageous Effects of Invention

According to the one aspect of the present invention, a lithium battery having an improved energy density can be provided.

Brief Description of Drawings

[Fig. 1] Figure 1 is a schematic diagram showing an example of a structure of part of skeleton of a current collector used for a lithium battery according to an embodiment of the present invention.
[Fig. 2] Figure 2 is a schematic sectional view showing a state in which a mixture is filled in the current collector shown in Fig. 1.
[Fig. 3] Figure 3 is a vertical sectional view schematically showing a lithium battery according to an embodiment of the present invention.

Description of Embodiments

[Explanation of embodiment of invention]

To begin with, contents of the embodiment according to the present invention will be listed and explained.

An embodiment according to the present invention relates to (1) a lithium battery including a positive electrode, a negative electrode, a separator interposed between the positive electrode and the negative electrode, and a nonaqueous electrolyte, wherein the positive electrode includes a metal positive electrode current collector having a three-dimensional network hollow skeleton and a positive electrode mixture, which is filled in the positive electrode current collector and which contains a positive electrode active material, the thickness of the positive electrode is 0.2 to 5 mm, the nonaqueous electrolyte contains an ionic liquid and a lithium salt, the ionic liquid is a molten salt of a cation (first cation) and an anion (first anion), and the concentration of the lithium salt in the nonaqueous electrolyte is 0.8 to 6.2 mol/L.

In the case where the electrode in which the mixture containing the active material is filled in the metal current collector having a three-dimensional network hollow skeleton is used as the positive electrode, the thickness of the positive electrode can be increased and, in addition, the surface area can be increased. Therefore, it is not necessary to increase the facing area of the positive electrode and the negative electrode. Consequently, the volume of the separator in the lithium battery can be decreased. The volume of the separator not contributing to the battery capacity can be decreased and, thereby, the energy density (or capacity) of the battery can be improved.

In this regard, in the case where the thickness of the positive electrode is large, even when a common organic electrolytic solution is used, only part of the positive electrode active material is utilized for a battery reaction. The reason for this is estimated that charging and discharging are not performed smoothly because the movement speeds of lithium ions moving in the electrolytic solution for charging and discharging are low.

On the other hand, the battery can be actuated by using a nonaqueous electrolyte containing an ionic liquid. Although the reasons for actuation of the battery by using the nonaqueous electrolyte containing an ionic liquid are not certain, the reasons are considered to be as described below. In the case where the nonaqueous electrolyte containing the ionic liquid and a lithium salt serving as a supporting electrolyte is used, great many cations and anions constituting each of the ionic liquid and the supporting electrolyte are present in the nonaqueous electrolyte. Also, in the case where the ionic liquid is used, the concentration of the supporting electrolyte in the nonaqueous electrolyte is increased easily. Therefore, it is estimated that ions in an amount necessary and sufficient for actuating the battery are ensured easily. In this regard, the ionic liquid refers to a liquid which is a salt in a molten state (molten salt) and which has ion conductivity.

The lithium salt is a salt of a lithium ion (second cation) and an anion (second anion) and functions as a supporting electrolyte of the nonaqueous electrolyte. The lithium ion is involved in a Faraday reaction, that is, the lithium ion is involved in a charge-discharge reaction accompanied by giving and receiving of electrons (that is, oxidation-reduction reaction) at the electrodes of the lithium battery.

(2) Preferably, the porosity of the positive electrode is 10 to 40 percent by volume and the proportion of the positive electrode active material in the total mass of the positive electrode is 60 to 95 percent by mass. As for such a positive electrode, the porosity of the positive electrode is relatively high in spite of a large amount of filling of the positive electrode active material. Therefore, even when the thickness of the positive electrode is increased, the nonaqueous electrolyte penetrates into the inside of the positive electrode and the positive electrode active material in the inside of the positive electrode can be utilized for the battery reaction more effectively.

(3) Preferably, the proportion of the total amount of the ionic liquid and the lithium salt in the nonaqueous electrolyte is 80 percent by mass or more. A large amount of ions are ensured in the nonaqueous electrolyte easily and charging and discharging are performed more efficiently by using such a nonaqueous electrolyte.

(4) The negative electrode may include a metal negative electrode current collector having a three-dimensional network hollow skeleton and a negative electrode mixture, which is filled in the negative electrode current collector and which contains a negative electrode active material, and the thickness of the negative electrode may be 0.2 to 5 mm. In the case where such a negative electrode is used, the thickness of the negative electrode can be increased and the capacity balance between the positive electrode and the negative electrode can be enhanced. Consequently, it is more effective in increasing the energy density of the battery.

(5) Preferably, the porosity of the negative electrode is 10 to 40 percent by volume, and the proportion of the negative electrode active material in the total mass of the negative electrode is 60 to 95 percent by mass. As for such a negative electrode, the porosity of the negative electrode is relatively high in spite of a large amount of filling of the negative electrode active material. Therefore, even when the thickness of the negative electrode is increased, the nonaqueous electrolyte penetrates into the inside of the negative electrode and the negative electrode active material in the inside of the negative electrode can be utilized for the battery reaction more effectively.

(6) The amount of the nonaqueous electrolyte may be 3 to 30 parts by mass relative to 100 parts by mass of the positive electrode active material. In the case where such an amount of nonaqueous electrolyte is used, even when the thickness of the electrode, e.g., the positive electrode, is large, the charge and discharge reaction can proceed efficiently.

(7) Preferably, the cation constituting the ionic liquid is an organic cation and the anion is a bissulfonylamide anion. The melting point of such an ionic liquid can be lowered. Therefore, the viscosity is low at a relatively low temperature, ions can be moved more smoothly and, in addition, the decomposition resistance at the positive electrode is ensured easily.

(8) Preferably, the lithium salt is a salt of a lithium ion and a bissulfonylamide anion. Such a lithium salt can relatively lower the viscosity of the nonaqueous electrolyte and the solubility into the ionic liquid is high. Therefore, high ion conductivity is obtained easily.

[Detail of embodiment of invention]

Specific examples of the lithium batteries according to embodiments of the present invention will be described below with reference to drawings appropriately. In this regard, the present invention is not limited to these examples. The present invention is to be determined by the appended claims and is intended to cover all modifications within the spirit and scope of the claims or the equivalents thereof.

(Positive electrode)

A positive electrode includes a positive electrode current collector and a positive electrode mixture attached to the positive electrode current collector. The positive electrode current collector is a metal porous body having a three-dimensional network hollow skeleton. In the positive electrode, the positive electrode mixture is filled in a porous structure of the positive electrode current collector.

The three-dimensional network hollow skeleton of the positive electrode current collector has cavities in the inside. Consequently, the positive electrode current collector is very lightweight in spite of having a bulky three-dimensional structure. Such a positive electrode current collector can be formed by subjecting a resin porous body having continuous voids to a plating treatment with a metal constituting the current collector and, in addition, decomposing or dissolving the internal resin through a heat treatment. The three-dimensional skeleton is formed by the plating treatment and the inside of the skeleton can be made hollow by decomposition or dissolution of the resin.

The resin porous body is not specifically limited insofar as continuous voids are included, and resin foams, resin nonwoven fabrics, and the like can be used. As for resins constituting these porous bodies, it is good enough that the inside of the skeleton can be made hollow by decomposition, dissolution, or the like while the shape of the metal three-dimensional network skeleton is maintained after the plating treatment. It is desirable that the resin in the skeleton be decomposed or dissolved by a heat treatment or the like and, thereby, be removed. After the heat treatment, components (resins, decomposition products, unreacted monomers, additives contained in the resin, and the like) remaining in the skeleton may be removed by washing and the like.

The resin constituting the resin porous body is not specifically limited insofar as removal can be performed by decomposition, dissolution, or the like, and examples thereof can include thermosetting resins, e.g., thermosetting polyurethanes and melamine resins; and thermoplastic resins, e.g., olefin resins (polyethylene, polypropylene, and the like) and thermoplastic polyurethanes. In the case where a resin foam is used, although depending on the type of the resin and the method for manufacturing the foam, each hole formed in the inside of the foam takes on the shape of a cell and they are ranged and communicated with each other to come into the state in which continuous voids are formed. In such a foam, cell-shaped holes are small and the sizes become more uniform easily. Therefore, it is preferable that the current collector be formed by using the resin foam. Also, it is preferable that thermosetting polyurethane and the like be used from the viewpoint of easiness in formation of holes having more uniform sizes and shapes.

It is good enough that the plating treatment can form a metal layer, which functions as a current collector, on the surface (including the surface in the continuous void) of the resin porous body, and known plating treatment methods, e.g., an electrolytic plating method and a molten salt plating, can be adopted. A three-dimensional network metal porous body in accordance with the shape of the resin porous body is formed by the plating treatment. In this regard, in the case where the plating treatment is performed by the electrolytic plating, it is desirable that a conductive layer be formed prior to the electrolytic plating. The conductive layer may be formed on the surface of the resin porous body by electroless plating, vapor deposition, sputtering, and others, e.g., coating of conductive agent, or be formed by dipping the resin porous body into a dispersion containing a conductive agent.

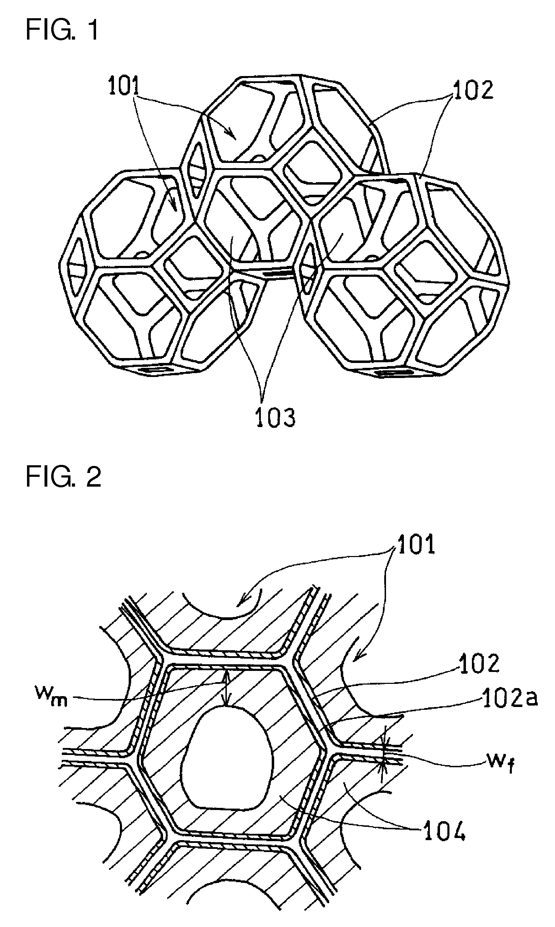

After the plating treatment, the resin porous body is removed by heating and, thereby, cavities are formed in the inside of the skeleton of the metal porous body, so that a hollow is made. The width of the cavity in the inside of the skeleton (the width $w_f$ of the cavity shown in Fig. 2 described later) is, for example, 0.5 to 5 $\mu$m, and preferably 1 to 4 $\mu$m or 2 to 3 $\mu$m in an average value. The resin porous body may be removed by performing a heat treatment while an appropriate voltage is applied, as necessary. Alternatively, the heat treatment may be performed while a voltage is applied in a state in which the porous body subjected to the plating treatment is dipped into a molten salt plating bath.

The resulting current collector (metal porous body) has a three-dimensional network structure corresponding to the shape of the resin foam. Specifically, the current collector has many holes, where each hole takes on the shape of a cell and these cell-shaped holes are ranged and communicated to form continuous voids. An opening (or window) is formed between adjacent cell-shaped holes, and it is preferable that the holes come into the state of being communicated with each other through this opening. The shape of the opening (window) is not specifically limited and is, for example, substantially polygonal (for example, substantially triangle, substantially tetragonal, substantially pentagonal, and/or substantially hexagonal). In this regard, the term "substantially polygonal" is used in a sense including polygons and shapes similar to the polygons (for example, polygonal shapes with rounded corners and polygonal shapes with curved sides). Figure 1 shows a schematic diagram of the skeleton of such a current collector.

The current collector has a plurality of cell-shaped holes 101 surrounded by a metal skeleton 102, and a substantially polygonal opening (or window) 103 is disposed between holes 101 adjacent to each other. The adjacent holes 101 are communicated with each other through the opening 103 and, thereby, the current collector has continuous voids. The metal skeleton 102 is three-dimensionally formed in such a way as to form cell-shaped holes and, in addition, connect them. Consequently, the three-dimensional network structure is formed.

The porosity of the thus obtained current collector is, for example, 40 to 99 percent by volume, preferably 60 to 98 percent by volume, and further preferably 80 to 98 percent by volume. Also, the average hole diameter (average diameter of cell-shaped holes communicated with each other) in the three-dimensional network structure is, for example, 50 to 1,000 $\mu$m, preferably 100 to 900 $\mu$m, and further preferably 350 to 900 $\mu$m. In this regard, the average hole diameter is smaller than the thickness of the current collector (or electrode). The electrode is formed by filling a mixture into the current collector and, thereafter, usually performing drying and compression (or rolling) in the thickness direction of the current collector. The skeleton of the current collector is deformed by the rolling and the porosity and the average hole diameter are changed. The above-described ranges of the porosity and the average hole diameter are the ranges of the porosity and the average hole diameter of the current collector before rolling (before filling of mixture).

Such a current collector has a very high porosity and a large specific surface area. That is, the active material can be attached to a wide area of the current collector surface including the surface in the voids. Meanwhile, although much active material is filled in the voids, the contact area between the current collector and the active material can be increased and the porosity can also be increased, so that the active material can be effectively utilized. Usually, the conductivity of the positive electrode of the lithium battery is enhanced by adding a conductive assistant. However, in the case where the above-described current collector is used, high conductivity is ensured easily even when the amount of addition of the conductive assistant is reduced. Therefore, the rate characteristics and the energy density (and capacity) of the battery can be enhanced more effectively.

The specific surface area (BET specific surface area) of the current collector is, for example, 100 to 700 cm$^2$/g, preferably 150 to 650 cm$^2$/g, and further preferably 200 to 600 cm$^2$/g.

As for a metal constituting the positive electrode current collector (the above-described metal used for plating), a known metal to be used as a positive electrode current collector of the lithium battery can be utilized. Examples of such metals can include at least one type selected from aluminum, aluminum alloys, nickel, and nickel alloys. In the case where a porous body formed from such a metal is used as the positive electrode current collector, a high current collecting effect can be expected. Among these metals, in particular, aluminum, aluminum alloys, and the like are suitable for the positive electrode current collector.

The positive electrode is formed by filling the positive electrode mixture into the voids of the positive electrode current collector obtained as described above and, as necessary, compressing the current collector in the thickness direction. The positive electrode mixture contains a positive electrode active material as an indispensable component and may contain a conductive assistant and/or a binder as an optional component. Also, the positive electrode mixture can contain a known solid electrolyte (particles), as necessary.

Figure 2 is a schematic sectional view showing the state in which the positive electrode mixture is filled in the voids of the positive electrode current collector shown in Fig. 1.

The current collector has a metal skeleton 102 and cell-shaped holes 101 surrounded by the skeleton 102. An opening, although not shown in the drawing, is disposed between the holes 101 adjacent to each other, and the adjacent holes are communicated with each other through this opening, so that continuous voids are formed. A positive electrode mixture 104 is filled in the cell-shaped holes 101 so as to be attached to the surface of the metal skeleton 102 and form a positive electrode mixture layer having a thickness of $w_m$. In this regard, a cavity 102a having a width $w_f$ is formed in the inside of the skeleton 102 of the positive electrode current collector. After the positive electrode mixture 104 is filled, voids remain inside the positive electrode mixture layer in the cell-shaped holes 101. After the positive electrode mixture is filled into the positive electrode current collector, the positive electrode is formed by rolling the current collector in the thickness direction, as necessary. Figure 2 shows the state before rolling. In the positive electrode obtained by the rolling, the skeleton 102 comes into the state of being somewhat crushed in the thickness direction, and the voids inside the positive electrode mixture layers in the holes 101 and the cavities in the skeleton 102 come into the state of being crushed. After the rolling of the current collector as well, the voids inside the positive electrode mixture layers come into the state of remaining to some extent and, thereby, the porosity of the positive electrode can be increased.

As for the positive electrode active material, a material, into which lithium ions are intercalated and from which lithium ions are deintercalated (lithium ions can be intercalated and deintercalated), can be used. Examples of such materials can include metal chalcogen compounds (sulfides, oxides, and the like) and lithium-containing transition metal phosphates (for example, iron phosphate having an olivine type structure). One type of these positive electrode active materials can be used alone or at least two types can be used in combination.

Examples of metal sulfides can include transition metal sulfides, e.g., $TiS_2$, $V_2S_3$, $FeS$, and $FeS_2$; and lithium-containing metal complex sulfides. The complex sulfides can be represented by, for example, $Li_xM^1_yS_z$. Here, $M^1$ is at least one type selected from the group consisting of metal elements of groups 3 to 15 of the periodic table. Specific examples of metal element $M^1$ include transition metal elements, e.g., Mo, Ti, Cu, Ni, and Fe; and typical metal elements (metal elements of group 14 of the periodic table, e.g., Sn and Pb; metal elements of group 15 of the periodic table, e.g., Sb; and the like). The coefficient x of lithium is, for example, 0.9 to 3, and preferably 0.9 to 1.2. The coefficient y of the metal element $M^1$ is, for example, 0.1 to 2, and preferably 0.5 to 1.5. The coefficient z of the sulfur element is, for example, 1.8 to 2.2.

Examples of metal oxides can include transition metal oxides, e.g., $TiO_2$, $Cr_3O_8$, $V_2O_5$, and $MnO_2$ or compounds derived from them by doping with lithium; and lithium-containing metal complex oxides. Examples of lithium-containing metal complex oxides can include $Li_mM^2_nO_p$, $Li_mM^3_qMn_{2-q}O_4$, and $Li_4Ti_5O_{12}$. Here, $M^2$ is a transition metal element (Co, Ni, Mn, Cr, Fe, and the like) and $M^3$ is a transition metal element other than Mn (Co, Ni, Cr, Fe, and the like). Those in which part of transition metal elements $M^2$ and $M^3$ are substituted with other elements (alkaline earth metal elements, e.g., Ca and Mg; metal elements of groups 12 to 15, e.g., Zn, Al, Sn, and Sb, of the periodic table; and the like can be used as the positive electrode active materials. The coefficient m of lithium is, for example, 0.9 to 5, and preferably 0.9 to 1.5. The coefficient n of the transition metal element $M^2$ is, for example, 0.9 to 1.5, and preferably 0.9 to 1.2. The coefficient p of oxygen element can be selected from the range of, for example, 1.8 to 13 appropriately in accordance with the type of the transition metal element, and preferably 1.8 to 2.2, 3.8 to 4.2, or 11.8 to 12.2. The coefficient q of the transition metal element $M^3$ satisfies $0 < q < 2$.

Specific examples of lithium-containing metal complex oxides include lithium cobaltate, lithium nickelate, lithium nickel cobaltate ($LiCo_{0.3}Ni_{0.7}O_2$ and the like), lithium manganate, lithium manganate compounds ($LiM^4_qMn_{2-q}O_4$: here, $M^4$ is, for example, Cr, Co, and/or Ni), and lithium titanate ($Li_4Ti_5O_{12}$).

Examples of iron phosphate having an olivine type structure can include $LifePO_4$ and other compounds in which part of iron is substituted with transition metal element and/or typical metal element ($LiFe_{0.5}Mn_{0.5}PO_4$ and the like).

Also, the positive electrode active material is not limited to these examples, and known positive electrode active materials used as the positive electrode active materials of the lithium battery can be used.

The type of the conductive assistant is not specifically limited, and examples thereof include carbon black, e.g., acetylene black and Ketjenblack; conductive fibers, e.g., carbon fibers and metal fibers; and nanocarbon, e.g., carbon nanotube. The amount of the conductive assistant is not specifically limited and is, for example, 0.1 to 15 parts by mass, and preferably 0.5 to 10 parts by mass relative to 100 parts by mass of active material. In the case where the above-described current collector is used, the conductivity of the electrode is enhanced easily, so that high conductivity can be ensured even when the amount of the conductive assistant is, for example, 0.7 to 8 parts by mass or about 1 to 7.5 parts by mass relative to 100 parts by mass of the active material.

The type of the binder is not specifically limited and, for example, fluororesins, e.g., polyvinylidene fluorite (PVDF) and polytetrafluoroethylene; chlorine-containing vinyl resins, e.g., polyvinyl chloride; polyolefin resins; rubber-like polymers, e.g., styrenebutadiene rubber; polyvinyl pyrrolidone, polyvinyl alcohol; cellulose derivatives (cellulose ether and the like), e.g., carboxymethyl cellulose, and polysaccharide, e.g., xanthan gum, can be used. The amount of the binder is not specifically limited and is, for example, 0.5 to 15 parts by mass, preferably 0.5 to 10 parts by mass, and further preferably 0.7 to 8 parts by mass relative to 100 parts by mass of active material.

The mixture filled in the current collector is prepared by mixing the active material and optional components, e.g., the binder and the conductive assistant. A mixture prepared by further mixing a dispersion medium, in addition to these components, to come into a slurry state may be used. In this regard, a slurry-like mixture may be prepared by mixing the binder, which is dispersed into a dispersion medium and is brought into the state of dispersion, with the other components. As necessary, known additives (for example, a surfactant) can be added to the mixture.

The dispersion medium is not specifically limited insofar as the constituent components of the mixture are not adversely affected. Examples thereof can include hydrocarbons, e.g., n-hexane, cyclohexane, toluene, and xylene; carbonates, e.g., dimethyl carbonate, diethyl carbonate, ethyl methyl carbonate, propylene carbonate, and ethylene carbonate; ethers, e.g., tetrahydrofuran, 1,4-dioxane, and 1,3-dioxolane; alcohols, e.g., ethanol and ethylene glycol; ketones, e.g., acetone; nitriles, e.g., acetonitrile; N-methyl-2-pyrrolidone (NMP); and water. One type of these dispersion media can be used alone or at least two types can be used in combination. In the case where the dispersion medium contains water, if a surfactant is added, the filling properties are enhanced easily when the mixture is filled into the current collector.

The mixture may be filled by dipping the current collector into a slurry-like mixture or be filled by applying the mixture by a known coating method. Application of the mixture is not specifically limited insofar as the mixture can be filled into voids in the current collector and can be performed by utilizing known coating methods, e.g., spray coaters, roll coaters, dip coaters, and bar coaters.

The current collector and the mixture filled therein are dried, as necessary, and are rolled in the thickness direction of the current collector. Drying can be performed under the condition in which the dispersion medium can be removed and, as necessary, may be performed under reduced pressure or may be performed under heating.

In the case where the current collector filled with the mixture is rolled, the three-dimensional network structure comes into the state of being somewhat crushed in the thickness direction of the current collector, and the volumes of the voids remaining inside the mixture layers and the cavities in the skeleton of the current collector decrease.

The thickness $w_m$ of the mixture layer formed by filling the mixture into the cell-shaped holes of the current collector is, for example, 10 to 500 $\mu$m, preferably 40 to 250 $\mu$m, and further preferably 100 to 200 $\mu$m. In order that voids can be ensured inside the mixture layer formed in the cell-shaped holes, the thickness $w_m$ of the mixture layer is preferably 5% to 40% of the average hole diameter of the cell-shaped holes, and further preferably 10% to 30%.

The thickness of the positive electrode is 0.2 mm or more, preferably 0.5 mm or more, and further preferably 0.7 mm or more. Also, the thickness of the positive electrode is 5 mm or less, preferably 4.5 mm or less, and further preferably 4 mm or less or 3 mm or less. These lower limit values and upper limit values can be combined optionally. The thickness of the positive electrode may be 0.5 to 4.5 mm or be 0.7 to 4 mm. If the thickness of the positive electrode is less than 0.2 mm, the amount of filling of the active material is not increased easily and, thereby, an effect of increasing the capacity becomes insufficient. Meanwhile, if the thickness of the positive electrode is more than 5 mm, the utilization factor of the active material decreases easily, and the effect of increasing the capacity cannot be expected. The thickness of the positive electrode can be controlled by adjusting the thickness of the current collector, the amount of filling of the mixture, the degree of rolling, and the like.

In common lithium batteries (primary battery, secondary battery), a positive electrode formed by coating the surface of a metal foil current collector, e.g., aluminum foil, with the positive electrode mixture is used. The thickness of such a positive electrode is about 200 $\mu$m or less. The thickness of the positive electrode used for the lithium battery according to an embodiment of the present invention is the above-described value and the thickness is more than or equal to the thickness of the common positive electrode having a large thickness. If the thickness of the positive electrode increases, the rate is not increased easily by a commonly used organic electrolytic solution and, therefore, the battery is not actuated easily. However, in an embodiment of the present invention, the nonaqueous electrolyte including the ionic liquid is used, so that the rate can be increased and the battery can be actuated.

As described above, in an embodiment of the present invention, the battery can be actuated in spite of the use of positive electrode having a large thickness. Consequently, the filling factor of the positive electrode active material in the battery can be increased without indiscriminately increasing the facing area of the positive electrode and the negative electrode. Also, it is not necessary to excessively increase the facing area of the positive electrode and the negative electrode, so that an increase in the volume of the separator in the battery can be suppressed. Therefore, the energy density (and the capacity) of the battery can be increased.

The porosity of the positive electrode is, for example, 10 percent by volume or more, preferably 20 percent by volume or more, and further preferably 25 percent by volume or more. Also, the porosity of the positive electrode is, for example, 40 percent by volume or less, and preferably 35 percent by volume or less. These lower limit values and upper limit values can be combined optionally. The porosity of the positive electrode may be, for example, 10 to 40 percent by volume, 20 to 40 percent by volume, or 25 to 35 percent by volume. In this regard, the porosity of the positive electrode is the porosity of the positive electrode used for the battery and is the porosity after rolling in the case where the current collector is rolled after filling of the mixture. The porosity of the positive electrode can be controlled by adjusting the porosity of the current collector, the amount of filling of the mixture, the degree of rolling, and the like.

In this regard, the porosity (%) of the positive electrode can be determined on the basis of the following formula, for example.

$$\text{positive electrode porosity } (\%) = V_t/V_a \times 100$$

$$V_t = V_a - (W_c/D_c + W_m/D_m)$$

(in the formula, $V_t$ represents the total volume ($cm^3$) of voids in the positive electrode, $V_a$ represents the apparent volume ($cm^3$) of the positive electrode, $W_c$ represents the weight (g) of the positive electrode current collector, $W_m$ represents the weight (g) of the positive electrode mixture, $D_c$ represents the density ($g/cm^3$) of the positive electrode current collector, and $D_m$ represents the density ($g/cm^3$) of the positive electrode mixture)

The apparent volume $V_a$ of the positive electrode can be calculated from the area and the thickness of the positive electrode.

Meanwhile, the proportion of the positive electrode active material in the total mass of the positive electrode is, for example, 60 percent by mass or more, preferably 65 percent by mass or more, and further preferably 68 percent by mass or more. Also, the proportion of the positive electrode active material in the total mass of the positive electrode is, for example, 95 percent by mass or less, preferably 90 percent by mass or less, and further preferably 88 percent by mass or less. These lower limit values and upper limit values can be combined optionally. The proportion of the positive electrode active material in the total mass of the positive electrode may be, for example, 60 to 95 percent by mass, 65 to 95 percent by mass, or 68 to 90 percent by mass.

As described above, the proportion (filling factor) of the positive electrode active material in the positive electrode can be increased in spite of the high porosity. Therefore, in the case where the porosity and the proportion of the positive electrode active material are within the above-described ranges, even when the thickness of the positive electrode is large, the nonaqueous electrolyte can be penetrated into the inside to induce a charge and discharge reaction and the active material in the inside of the positive electrode can be utilized effectively. Consequently, the capacity can be increased even when the area (projected area) of the positive electrode is not so large. Therefore, the energy density of the battery can be increased more effectively. In addition, the contact between the current collector and the active material is good and the conductivity of the positive electrode is enhanced easily because of the state in which much mixture is attached to the surface with wide area spreading in the inside of the voids of the current collector.

(Negative electrode)

As for the negative electrode, known negative electrodes can be utilized in accordance with the type of the positive electrode, the type of the battery, and the like.

The negative electrode contains a negative electrode active material. Examples of negative electrode active materials include lithium metal, lithium alloys (lithium-aluminum alloys and the like), and materials into which lithium ions are intercalated and from which lithium ions are deintercalated (lithium ions can be intercalated and deintercalated). One type of negative electrode active materials can be used alone or at least two types can be used in combination.

Examples of materials, into which lithium ions can be intercalated and from which lithium ions can be deintercalated, include carbon materials, lithium titanium oxide ($Li_4Ti_5O_{12}$ and the like), silicon oxide, silicon alloys, tin oxide, and tin alloys. Examples of carbon materials can include graphite (artificial graphite, natural graphite, and the like), graphitizable carbon (soft carbon), and non-graphitizable carbon (hard carbon). Among them, lithium metal; lithium alloys; lithium titanium oxide; carbon materials, e.g., graphite; and the like are preferable, although depending on the type of the positive electrode active material. The negative electrode may be formed by attaching a negative electrode mixture containing the negative electrode active material to the surface of the current collector in accordance with the type of the negative electrode active material. Also, the negative electrode may be formed by depositing the negative electrode active material on the surface of the current collector by a gas phase method or the like.

The negative electrode may be foil of lithium metal, a lithium alloy, or the like, or be those in which the negative electrode active material is attached to the surface of the negative electrode current collector. Such a negative electrode current collector may be in the shape of a non-pore sheet, e.g., foil of metal or alloy, or be porous, that is, a punching metal or the like. The negative electrode current collector is made of a metal and examples of metals used include at least one type selected from the group consisting of copper, copper alloys, aluminum, and aluminum alloys. A high current collecting effect is obtained easily by using these metals.

The thickness of the negative electrode current collector is, for example, 10 to 50 $\mu$m, and preferably 15 to 35 $\mu$m.

In an embodiment of the present invention, the positive electrode having a large thickness, as described above, is used. Such a positive electrode has a high capacity and, therefore, it is preferable that a negative electrode having a high capacity be used from the viewpoint of the capacity balance between the positive electrode and the negative electrode. As for such a negative electrode, a negative electrode having the same form as the form of the positive electrode is used. Specifically, in the negative electrode, it is preferable that a metal porous body having a three-dimensional network hollow skeleton, as with the positive electrode current collector, be used as the negative electrode current collector and a negative electrode mixture containing the negative electrode active material be filled into the porous structure of the negative electrode current collector.

Such a negative electrode current collector having a three-dimensional network hollow skeleton can be obtained in the same manner as the positive electrode current collector. At that time, preferably, at least one type selected from the group consisting of copper, copper alloys, aluminum, and aluminum alloys is used as the metal constituting the current collector. The porosity, the average hole diameter, the specific surface area, and the width of cavity formed in the skeleton of the current collector of the negative electrode current collector having such a porous structure can be selected appropriately from the ranges described with respect to the positive electrode current collector. Also, the thickness of the negative electrode mixture layer formed in the hole can be selected from the range described with respect to the positive electrode mixture layer.

The combination of the metal constituting the negative electrode current collector and the negative electrode active material is not specifically limited. However, in the case where a copper or copper alloy negative electrode current collector is used, it is preferable that a negative electrode active material containing a carbon material be used. Also, in the case where aluminum or an aluminum alloy is used as the negative electrode current collector, it is preferable that a negative electrode active material containing lithium titanium oxide be used.

The negative electrode mixture to be attached to the negative electrode current collector contains a negative electrode active material as an indispensable component and may contain a conductive assistant and/or a binder as an optional component. The types and the amounts of the conductive assistant and the binder can be selected appropriately from the same ranges as those in the case of the positive electrode. The negative electrode mixture can be prepared in conformity with the case of the positive electrode mixture. A dispersion medium can be used for preparation of the negative electrode mixture, and the dispersion medium can be selected appropriately from the examples shown with respect to the positive electrode. As for the method for attaching (or filling) the negative electrode mixture to the negative electrode current collector, the same method as that in the case of the positive electrode can be adopted.

In the negative electrode including the metal negative electrode current collector having a three-dimensional network hollow skeleton, the thickness of the negative electrode can be selected from the same range as that of the thickness of the positive electrode. In the case where such a negative electrode is used, the capacity of the negative electrode can be increased without indiscriminately increasing the facing area of the positive electrode and the negative electrode. Therefore, combined with the high capacity of the positive electrode, it is more effective in increasing the energy density of the battery.

The porosity of the negative electrode including the metal negative electrode current collector having a three-dimensional network hollow skeleton can be selected appropriately from the range of the porosity described with respect to the positive electrode. Also, the proportion of the negative electrode active material in the total amount of the negative electrode can be selected appropriately from the above-described range of the proportion of the positive electrode active material in the total amount of the positive electrode. In the case where a negative electrode having such porosity and proportion of the negative electrode active material is used, the active material in the inside of the negative electrode can be utilized effectively and the capacity can be increased as in the case of the positive electrode. As a result, the energy density of the battery can be increased more effectively. Also, in the negative electrode as well, high conductivity is ensured easily.

(Separator)

The separator has the ion permeability and is interposed between the positive electrode and the negative electrode to physically separate them and prevent short-circuit. The separator has a porous structure, and pass ions by holding a nonaqueous electrolyte in pores. As for the separator, fine porous films, nonwoven fabrics (including paper), and the like can be used.

Examples of materials usable for the separator include polyolefins, e.g., polyethylene and polypropylene; polyesters, e.g., polyethylene terephthalate; polyamides; polyimides; cellulose; and glass fibers.

The thickness of the separator is, for example, about 10 to 100 $\mu$m.

(Nonaqueous electrolyte)

The nonaqueous electrolyte contains the ionic liquid and the lithium salt. The ionic liquid is a molten salt of a first cation and a first anion. The lithium salt is dissociated into a lithium ion (second cation) and a second anion in the nonaqueous electrolyte and the lithium ion serves as a carrier (carrier ion) of charge in the battery.

(Ionic liquid)

Examples of the first cation constituting the ionic liquid can include inorganic cations; and organic cations, e.g., organic onium cations. The ionic liquid is preferably a liquid at an actuation temperature of the battery and is more preferably a liquid at normal temperature.

Examples of inorganic cations include metal cations, e.g., alkaline earth metal cations (magnesium ion, calcium ion, and the like) and transition metal cations; and ammonium cations.

Examples of organic onium cations include cations derived from aliphatic amines, alicyclic amines, and aromatic amines (for example, quaternary ammonium cations) and, in addition, nitrogen-containing onium cations, e.g., cations having a nitrogen-containing heterocycle (that is, cations derived from cyclic amines); sulfur-containing onium cations; and phosphorus-containing onium cations.

Examples of quaternary ammonium cations can include tetraalkylammonium cation (tetra$C_{1-10}$alkylammonium cations), e.g., tetramethylammonium cation, tetraethylammonium cation (TEA$^+$), ethyltrimethylammonium cation, hexyltrimethylammonium cation, ethyltrimethylammonium cation, and methyltriethylammonium cation (TEMA$^+$).

Examples of sulfur-containing onium cations can include tertiary sulfonium cations, for example, trialkylsulfonium cations (for example, tri$C_{1-10}$alkylsulfonium cations), e.g., trimethylsulfonium cation, trihexylsulfonium cation, and dibutylethylsulfonium cation.

Examples of phosphorus-containing cations include quaternary phosphonium cations, for example, tetraalkylphosphonium cations (for example, tetra$C_{1-10}$ alkylphosphonium cations), e.g., tetramethylphosphonium cation, tetraethylphosphonium cation, and tetraoctylphosphonium cation; and alkyl(alkoxyalkyl)phosphonium cations (for example, tri$C_{1-10}$alkyl($C_{1-5}$alkoxy$C_{1-5}$alkyl)phosphonium cations), e.g., triethyl(methoxymethyl)phosphonium cation, diethylmethyl(methoxymethyl)phosphonium cation, and trihexyl(methoxyethyl)phosphonium cation. In this regard, in the alkyl(alkoxyalkyl)phosphonium cation, the total number of alkyl groups and alkoxyalkyl groups bonded to a phosphorus atom is 4, and the number of alkoxyalkyl groups is preferably 1 or 2.

Meanwhile, the carbon number of alkyl group bonded to a nitrogen atom of the quaternary ammonium cation, a sulfur atom of the tertiary sulfonium cation, or a phosphorus atom of the quaternary phosphonium cation is preferably 1 to 8, further preferably 1 to 4, and particularly preferably 1, 2, or 3.

Examples of nitrogen-containing heterocycle skeletons of the organic onium cations can include 5- to 8-membered heterocycles having 1 or 2 nitrogen atoms as a constituent atom of the ring, e.g., pyrrolidine, imidazoline, imidazole, pyridine, and piperidine; and 5-to 8-membered heterocycles having 1 or 2 nitrogen atoms and other heteroatom (oxygen atom, sulfur atom, and the like) as constituent atoms of the ring, e.g., morpholine.

In this regard, the nitrogen atom serving as a constituent atom of the ring may have an organic group, e.g., an alkyl group, as a substituent. Examples of alkyl groups can include alkyl groups having the carbon number of 1 to 10, e.g., a methyl group, an ethyl group, a propyl group, and an isopropyl group. The carbon number of the alkyl group is preferably 1 to 8, further preferably 1 to 4, and particularly preferably 1, 2, or 3.

Among the nitrogen-containing organic onium cations, besides the quaternary ammonium cations, in particular those including pyrrolidine, pyridine, or imidazoline as the nitrogen-containing heterocycle skeleton are preferable. It is preferable that the organic onium cation having a pyrrolidine skeleton have two alkyl groups described above at one nitrogen atom constituting the pyrrolidine ring. It is preferable that the organic onium cation having a pyridine skeleton have one alkyl group described above at one nitrogen atom constituting the pyridine ring. Also, it is preferable that the organic onium cation having an imidazoline skeleton have one alkyl group described above at each of two nitrogen atoms constituting the imidazoline ring.

Specific examples of organic onium cations having a pyrrolidine skeleton include 1,1-dimethylpyrrolidinium cation, 1,1-diethylpyrrolidinium cation, 1-ethyl-1-methylpyrrolidinium cation, 1-methyl-1-propylpyrrolidinium cation (MPPY$^+$), 1-butyl-1-methylpyrrolidinium cation (MBPY$^+$), and 1-ethyl-1-propylpyrrolidinium cation. Among them, pyrrolidinium cations including a methyl group and an alkyl group having the carbon number of 2 to 4, for example, MPPY$^+$ and MBPY$^+$ are preferable because, in particular, the electrochemical stability is high.

Specific examples of organic onium cations having a pyridine skeleton include 1-alkylpyridinium cations, e.g.,

1-methylpyridinium cation, 1-ethylpyridinium cation, and 1-propylpyridinium cation. Among them, pyridinium cations including an alkyl group having the carbon number of 1 to 4 are preferable.

Specific examples of organic onium cations having an imidazoline skeleton include 1,3-dimethylimidazolium cation, 1-ethyl-3-methylimidazolium cation (EMI⁺), 1-methyl-3-propylimidazolium cation, 1-butyl-3-methylimidazolium (BMI⁺) cation, 1-ethyl-3-propylimidazolium cation, and 1-butyl-3-ethylimidazolium cation. Among them, imidazoline cations including a methyl group and an alkyl group having the carbon number of 2 to 4, for example, EMI⁺ and BMI⁺ are preferable.

Preferably, the first anion contains a bissulfonylamide anion. Examples of bissulfonylamide anions include bis(fluorosulfonyl)amide anions [bis(fluorosulfonyl)amide anion $(N(SO_2F)_2^-)$ and the like], (fluorosulfonyl)(perfluoroalkylsulfonyl)amide anions [(fluorosulfonyl)(tlifluoromethylsulfonyl)amide anion $((FSO_2)(CF_3SO_2)N^-)$ and the like], and bis(perfluoroalkylsulfonyl)amide anions [bis(trifluoromethylsulfonyl)amide anion $(N(SO_2CF_3)_2^-)$, bis(pentafluoroethylsulfonyl)amide anion $(N(SO_2C_2F_5)_2^-)$, and the like]. The carbon number of the perfluoroalkyl group is, for example, 1 to 10, preferably 1 to 8, further preferably 1 to 4, and particularly preferably 1, 2, or 3 from the viewpoint of lowering of the melting point and the viscosity of the ionic liquid.

One type of these anions can be used alone or at least two types can be used in combination.

Among the bissulfonylamide anions, bis(fluorosulfonyl)amide anions (FSA⁻); and bis(perfluoroalkylsulfonyl)amide anions (PFSA⁻), e.g., bis(trifluoromethylsulfonyl)amide anion (TFSA⁻), bis(pentafluoroethylsulfonyl)amide anion, and (fluorosulfonyl)(trifluoromethylsulfonyl)amide anion; and the like are preferable.

It is preferable that the ionic liquid be a molten salt of the organic cation serving as the first cation and the bissulfonylamide anion serving as the first anion. The first cation is more preferably an organic onium cation having an imidazoline skeleton or a pyrrolidine skeleton, and particularly preferably EMI⁺, MPPY⁺, MBPY⁺, or the like from the viewpoints of the decomposition resistance, the ion conductivity, the electrochemical stability, and the like. Specific examples of ionic liquids include EMIFSA, EMITFSA, EMIPFSA, MPPYFSA, MPPYTFSA, MPPYPFSA, MBPYFSA, MBPYTFSA, and MBPYPFSA. It is preferable that the ionic liquid contain at least EMIFSA and/or MPPYFSA from the viewpoint of the decomposition resistance and high solubility of supporting electrolyte.

(Lithium salt)

The lithium salt is a salt of a lithium ion (second cation) revolved in the Faraday reaction and the second anion.

Examples of the second anion include, besides the bissulfonylamide anions described as the example of the first anion, anions of fluorine-containing acids [anions of fluorine-containing phosphoric acid, e.g., hexafluorophosphoric acid ion $(PF_6^-)$; anions of fluorine-containing boric acid, e.g., tetrafluorobouc acid ion $(BF_4^-)$; and the like], anions of chlorine-containing acids [perchloric acid ion $(ClO_4^-)$ and the like], anions of oxygen acid including an oxalate group [oxalato borate ions, e.g., lithium bis(oxalate)borate ion $(B(C_2O_4)_2^-)$; lithium tris(oxalate)phosphate ion $(P(C_2O_4)_3^-)$; and the like], and anions of fluoroalkanesulfonic acid [trifluoromethanesulfonic acid ion $(CF_3SO_3^-)$ and the like].

The second anion is preferably a bissulfonylamide anion, and most of all, FSA⁻, TFSA⁻, PFSA⁻, and the like are preferable.

Specific examples of the lithium salts include salts of the lithium ion and FSA⁻ (LiFSA) and salts of the lithium ion and TFSA⁻ (LiTFSA). One type of the lithium salts can be used alone or at least two types can be used in combination.

The concentration of the lithium salt in the nonaqueous electrolyte is 0.8 mol/L or more (for example, 1 mol/L or more), preferably 2 mol/L or more (for example, the concentration of more than 2 mol/L), and further preferably 2.5 mol/L or more or 2.8 mol/L or more (for example, 3 mol/L or more). Also, the concentration of the lithium salt in the nonaqueous electrolyte is 6.2 mol/L or less (for example, 6 mol/L or less), preferably 5.5 mol/L or less, and further preferably 5 mol/L or less. These lower limit values and upper limit values can be combined optionally. The concentration of the lithium salt in the nonaqueous electrolyte may be 1 to 6 mol/L. In an embodiment of the present invention, the concentration of the lithium salt is increased easily because the nonaqueous electrolyte contains the ionic liquid. Therefore, the concentration of the lithium salt in the nonaqueous electrolyte can also be specified to be, for example, 2 to 6 mol/L (for example, 2 to 5 mol/L), 2.5 to 6 mol/L, or 3 to 5 mol/L.

If the concentration of the lithium salt in the nonaqueous electrolyte is less than 0.8 mol/L, sufficient carrier ions cannot be supplied to the electrodes (in particular, positive electrode), and the rate required for actuating the battery cannot be ensured. Meanwhile, in the case where the concentration of the lithium salt in the nonaqueous electrolyte is more than 6.2 mol/L, the viscosity of the nonaqueous electrolyte excessively increases. Consequently, the ion conductivity is reduced and, in addition, the permeability into the electrode is reduced, so that the charge and discharge characteristics are degraded.

In a common lithium battery, the concentration of the lithium salt in the nonaqueous electrolyte (organic electrolytic solution) is about 1 to 1.5 mol/ L and 2 mol/L is the limit. In an embodiment of the present invention, a concentration (for example, 2 mol/L or more, or 2.5 mol/L or more) higher than such a concentration is employed, so that the rate characteristics are enhanced easily and the battery can be actuated at a higher efficiency. In the past, it has been believed that the rate characteristics of the nonaqueous electrolyte by using the ionic liquid becomes insufficient because the viscosity is high as compared with the viscosity of the organic electrolytic solution. However, as for the nonaqueous electrolyte by using the ionic liquid, although the viscosity somewhat increases, sufficient rate characteristics can be obtained unexpectedly.

The nonaqueous electrolyte can contain an organic solvent (carbonates, lactone, and the like) and known additives, as necessary. However, it is preferable that most of the nonaqueous electrolyte be the above-described ionic liquid and lithium salt. The total amount of the ionic liquid and the lithium salt in the nonaqueous electrolyte is, for example, 80 percent by mass or more, and preferably 90 percent by mass or more. In the case where such a nonaqueous electrolyte is used, large amounts of ions are ensured in the nonaqueous electrolyte easily, and even when the lithium salt concentration is high, charging and discharging can be performed smoothly.

In one embodiment of the lithium battery, a high capacity can be ensured by increasing the thickness of the positive electrode (or the thicknesses of the positive electrode and the negative electrode). In order that the battery reaction proceeds efficiently with such a high-capacity electrode, the amount of the nonaqueous electrolyte is preferably large. The amount of the nonaqueous electrolyte is, for example, 3 to 30 parts by mass, preferably 5 to 25 parts by mass, and further preferably 7 to 20 parts by mass relative to 100 parts by mass of positive electrode active material.

An increase in energy density can be expected by increasing the thickness of the positive electrode and, therefore, the lithium battery is not limited to the secondary battery but may be the primary battery.

The lithium battery can be formed by accommodating a group of electrodes composed of a positive electrode, a negative electrode, and a separator interposed therebetween in a battery case together with a nonaqueous electrolyte and sealing the battery case.

The group of electrodes may be a rolled group of electrodes formed by rolling the positive electrode, the negative electrode, and the separator into a spiral shape or be a stacked group of electrodes in which a plurality of layers of the positive electrodes and the negative electrodes are stacked while sheet-shaped separators are interposed between them.

The shape of the lithium battery is not specifically limited and may be, for example, cylindrical, rectangular, or the like. Alternatively, the battery may be of a laminate type. The battery case is not specifically limited and may be a can made of a metal, e.g., iron or aluminum, or be a bag-shaped resin film laminated with metal foil.

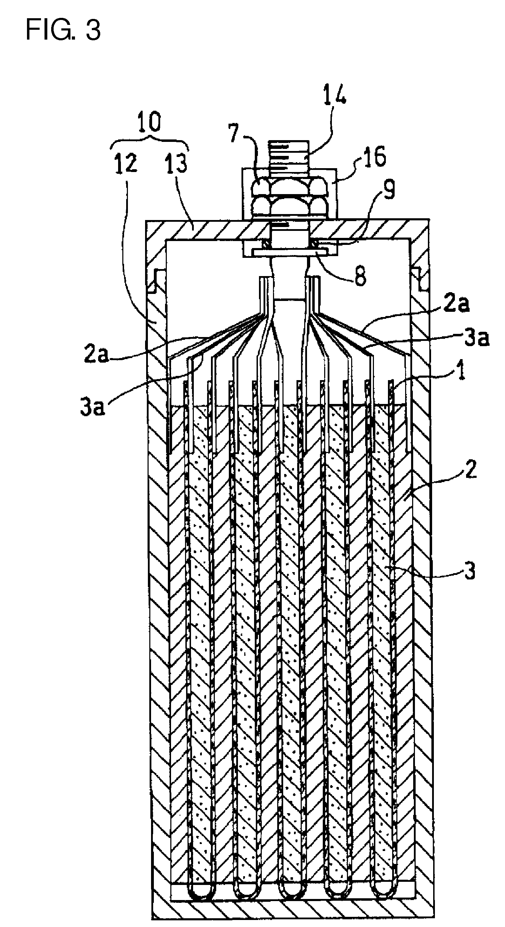

Figure 3 is a vertical sectional view schematically showing a configuration of a lithium battery according to an embodiment of the present invention.

The lithium battery is provided with a stacked group of electrodes, an electrolyte (not shown in the drawing), and a rectangular aluminum battery case 10 to accommodate them. The battery case 10 is formed from a container main body 12 having an opened upper portion and having a bottom and a lid body 13 to block the upper opening.

In assembling of the lithium battery, initially, the group of electrodes is formed and is inserted into the container main body 12 of the battery case 10. Thereafter, a step to pour the nonaqueous electrolyte into the container main body 12 and impregnate gaps between the separator 1, the positive electrode 2, and the negative electrode 3, constituting the group of electrodes is performed. Alternatively, the group of electrodes may be dipped into the nonaqueous electrolyte and, thereafter, the group of electrodes in the state of containing the nonaqueous electrolyte may be accommodated into the container main body.

An external positive electrode terminal 14 penetrating the lid body 13 while being connected to the battery case 10 is disposed on one side of the lid body 13 and, an external negative electrode terminal penetrating the lid body 13 while being insulated from the battery case 10 is disposed at the position on the other side of the lid body 13. A safety valve 16 to release a gas generated in the inside when the internal pressure of the electronic case 10 increases is disposed at the center of the lid body 13.

The stacked group of electrodes is formed from a plurality of positive electrodes 2 and a plurality of negative electrodes 3, each of which is in the shape of a rectangular sheet, and a plurality of separators 1 interposed between them. In Fig. 3, the separator 1 is formed into the shape of a bag in such a way as to surround the positive electrode 2, although the form of the separator is not specifically limited. The plurality of positive electrodes 2 and the plurality of negative electrodes 3 are alternately arranged in the stacking direction in the group of electrodes.

A positive electrode lead piece 2a may be formed at one end portion of each positive electrode 2. The positive electrode lead pieces 2a of the plurality of positive electrodes 2 are bundled and, in addition, are connected to the external positive electrode terminal 14 disposed on the lid body 13 of the battery case 10, so that the plurality of positive electrodes 2 are parallel-connected. Likewise, a negative electrode lead piece 3a may be formed at one end portion of each negative electrode 3. The negative electrode lead pieces 3a of the plurality of negative electrodes 3 are bundled and, in addition, are connected to the external negative electrode terminal disposed on the lid body 13 of the battery case 10, so that the plurality of negative electrodes 3 are parallel-connected. It is desirable that the bundle of the positive electrode lead pieces 2a and the negative electrode lead pieces 3a be arranged at the right and the left with a distance therebetween on one end surface of the group of electrodes in order to avoid contact with each other.

Both the external positive electrode terminal 14 and the external negative electrode terminal have columnar shapes and at least portions exposed to the outside have thread grooves. A nut 7 is fit on the thread groove of each terminal, and the nut 7 is fixed to the lid body 13 by rotating the nut 7. A flange portion 8 is disposed on a portion, which is accommodated into the inside of the battery case, of each terminal, and the flange portion 8 is fixed to the inside surface of the lid body 13 with a washer 9 therebetween by rotation of the nut 7.

[Additional note]

Furthermore, the additional notes below are disclosed with respect to the above-described embodiments.

(Additional note 1)

A lithium battery including a positive electrode, a negative electrode, a separator interposed between the positive electrode and the negative electrode, and a nonaqueous electrolyte, wherein the positive electrode includes a metal positive electrode current collector having a three-dimensional network hollow skeleton and a positive electrode mixture which is filled in the positive electrode current collector and which contains a positive electrode active material, the thickness of the positive electrode is 0.2 to 5 mm, the nonaqueous electrolyte contains an ionic liquid and a lithium salt, the ionic liquid is a molten salt of a cation and an anion, and the concentration of the lithium salt in the nonaqueous electrolyte is 0.8 to 6.2 mol/L.
In such a lithium battery, the thickness of the positive electrode can be increased. Therefore, it is not necessary to increase the facing area of the positive electrode (and the negative electrode) and, thereby, the volume of the separator in the lithium battery can be decreased. The volume of the separator not contributing to the battery capacitor can be decreased, so that the energy density of the battery can be improved.

(Additional note 2)

In the lithium battery according to the additional note 1, preferably, the negative electrode includes a metal negative electrode current collector having a three-dimensional network hollow skeleton and a negative electrode mixture which is filled in the negative electrode current collector and which contains a negative electrode active material, and the thickness of the negative electrode is 0.2 to 5 mm. In such a lithium battery, the capacity balance between the positive electrode and the negative electrode can be enhanced. Consequently, it is more effective in increasing the energy density of the battery.

(Additional note 3)

In the lithium battery according to the additional note 2, preferably, the metals constituting the positive electrode current collector and the negative electrode current collector are at least one type selected from the group consisting of aluminum and aluminum alloys, the positive electrode active material contains a lithium-containing metal complex oxide, and the negative electrode active material contains a lithium titanium oxide. In such a lithium battery, the energy density can be further increased.

(Additional note 4)

In the lithium battery according to the additional note 2, preferably, the metal constituting the positive electrode current collector is at least one type selected from the group consisting of aluminum and aluminum alloys, the metal constituting the negative electrode current collector is at least one type selected from the group consisting of copper and copper alloys, the positive electrode active material contains a lithium-containing metal complex oxide, and the negative electrode active material contains a carbon material, into which lithium ions are intercalated and from which lithium ions are deintercalated. In such a lithium battery, the energy density can be further increased.

(Additional note 5)

In any one of the lithium batteries according to the additional note 1 to additional note 4, the positive electrode mixture may further contain conductive assistant and the amount of the conductive assistant may be 0.1 to 15 parts by mass relative to 100 parts by mass of the positive electrode active material. Such a lithium battery can ensure high conductivity in spite of a relatively small amount of conductive assistant.

(Additional note 6)

In the lithium battery according to the additional note 5, the amount of the conductive assistant may be 1 to 7 parts by mass relative to 100 parts by mass of the positive electrode active material. Such a lithium battery can ensure high conductivity in spite of a relatively small amount of conductive assistant.

EXAMPLES

The present invention will be specifically described below with reference to the examples and the comparative examples, although the present invention is not limited to the following examples.

Example 1

A lithium battery (lithium secondary battery) was produced in the following procedure.

(1) Production of positive electrode

(a) Production of positive electrode current collector

A foam (porosity: 95 percent by volume, the number of holes (cells) on one inch (= 2.54 cm) cube basis: about 50, 100 mm long x 30 mm wide x 1.1 mm thick) of thermosetting polyurethane was prepared.

The foam was dipped into a conductive suspension containing graphite, carbon black (average particle diameter $D_{50}$: 0.5 $\mu$m), a resin binder, a penetrant, and an antifoaming agent and, thereafter, drying was performed, so that a conductive layer was formed on the surface of the foam. In this regard, the content of graphite and carbon black in the suspension was 25 percent by mass in total.

The foam provided with the conductive layer on the surface was dipped into a molten salt aluminum plating bath and a DC current was applied at a current density of 3.6 A/dm$^2$ for 90 minutes, so that an aluminum layer was formed. In this regard, the weight of aluminum layer per apparent area of the foam was 150 g/m$^2$. The molten salt aluminum plating bath contained 33 percent by mole of 1-ethyl-3-imidazolium chloride and 67 percent by mole of aluminum chloride and the temperature was 40°C.

The foam provided with the aluminum layer on the surface was dipped into a lithium chloride-potassium chloride eutectic molten salt at 500°C and the foam was decomposed by applying a negative potential of -1 V for 30 minutes. The resulting aluminum porous body was taken out of the molten salt and was subjected to cooling, washing with water, and drying, so that a positive electrode current collector was obtained. The resulting positive electrode current collector had a three-dimensional network porous structure in which holes reflecting the hole shape of the foam were communicated with each other, the porosity was 94 percent by volume, the average hole diameter was 550 $\mu$m, and the specific surface area on the basis of the BET method (BET specific surface area) was 350 cm$^2$/g. In this regard, the three-dimensional network aluminum skeleton had cavities formed by removing the foam in the inside.

(b) Production of positive electrode

A positive electrode mixture slurry was prepared by mixing a $LiCoO_2$ powder serving as a positive electrode active material, acetylene black serving as a conductive assistant, PVDF serving as a binder, and NMP serving as a dispersion medium. The mass ratio of the $LiCoO_2$ powder to acetylene black to PVDF was specified to be 88:6:6.

One end portion of an aluminum positive electrode lead was welded to the positive electrode current collector obtained in the above-described item (a). Thereafter, the positive electrode mixture slurry was filled into the positive electrode current collector by using a roller, and the dispersion medium was removed by drying. Subsequently, rolling was performed in the state of holding between a pair of rollers, so that a positive electrode having a thickness of 1.0 mm was formed. The porosity of the positive electrode after rolling was 35 percent by volume. The proportion of the positive electrode active material in the total mass of the positive electrode was calculated, resulting in 82 percent by mass. In this regard, the porosity of the positive electrode was calculated by the above-described method.

(2) Production of negative electrode

An aluminum current collector formed in the same manner as the production process of the positive electrode current collector in the above-described item (1) (a) was used as a negative electrode current collector.

A negative electrode mixture slurry was prepared by mixing a $Li_4Ti_5O_{12}$ powder serving as a negative electrode active material, acetylene black serving as a conductive assistant, PVDF serving as a binder, and NMP serving as a dispersion medium. The mass ratio of the $Li_4Ti_5O_{12}$ powder to acetylene black to PVDF was specified to be 90:5:5.

One end portion of an aluminum negative electrode lead was welded to the negative electrode current collector. Thereafter, the negative electrode mixture slurry was filled into the negative electrode current collector by using a roller, and the dispersion medium was removed by drying. Subsequently, rolling was performed in the state of holding between a pair of rollers, so that a negative electrode having a thickness of 1.0 mm was formed. The porosity of the negative electrode after rolling was measured in the same manner as for the positive electrode, resulting in 33 percent by volume. Also, the proportion of the negative electrode active material in the total mass of the negative electrode was calculated, resulting in 80 percent by mass.

(3) Assembly of lithium secondary battery

A separator (resin fine porous film, thickness 30 $\mu$m) was held between the positive electrode obtained in the above-described item (1) and the negative electrode obtained in the item (2), so that a group of electrodes was formed. A battery was produced by accommodating the resulting group of electrodes into a bag-shaped resin film laminated with aluminum serving as a barrier layer, pouring a nonaqueous electrolyte, and performing sealing. As for the nonaqueous electrolyte, a solution in which LiTFSA serving as a support electrolyte was dissolved in EMIFSA serving as an ionic liquid was used. In this regard, the concentration of LiTFSA in the nonaqueous electrolyte was specified to be 3 mol/L.

(4) Evaluation of discharge capacity

The resulting lithium secondary battery was charged up to the final voltage of 2.7 V at 0.2C. Thereafter, discharging to 1.5 V was performed at 0.2C and the discharge capacity at that time was measured. The discharge capacity per gram of the positive electrode active material was determined from the measurement value.

Comparative example 1

An organic electrolytic solution was prepared by dissolving $LiPF_6$ serving as a support electrolyte into a mixed solvent of ethylene carbonate and diethyl carbonate. The concentration of $LiPF_6$ in the organic electrolytic solution was specified to be a saturated concentration (about 2 mol/L). In this regard, the mass ratio of the ethylene carbonate to the diethyl carbonate in the mixed solvent was specified to be 1:1.

A lithium secondary battery was produced in the same manner as for Example 1 except that the resulting organic electrolytic solution was used in place of the nonaqueous electrolyte, and charging and discharging were performed to measure the discharge capacity. However, changes in voltage due to the resistance at the start of charging and discharging were large and charging and discharging were hardly performed.

Example 2

(1) Production of negative electrode

(a) Production of negative electrode current collector

A foam (porosity: 95 percent by volume, the number of holes (cells) on one inch (= 2.54 cm) cube basis: about 50, 100 mm long x 30 mm wide x 1.1 mm thick) of thermosetting polyurethane was prepared.

A Cu coating film (conductive layer) with a mass per unit area of 5 $g/cm^2$ was formed on the surface of the foam by sputtering.

The foam provided with the conductive layer on the surface served as a work. A Cu layer was formed on the surface by dipping the foam into a copper sulfate plating bath and applying a DC current at a cathode current density of 2 $A/dm^2$. The copper sulfate plating bath contained 250 g/L of copper sulfate, 50 g/L of sulfuric acid, and 30 g/L of copper chloride and the temperature was 30°C.

The foam provided with the Cu layer on the surface was heat-treated in the air atmosphere at 700°C, so that the foam was decomposed. Subsequently, firing in a hydrogen atmosphere was performed to remove an oxide coating film formed on the surface and, thereby, a copper porous body (negative electrode current collector) was obtained. The resulting negative electrode current collector had a three-dimensional network porous structure in which holes reflecting the hole shape of the foam were communicated with each other, the porosity was 92 percent by volume, the average hole diameter was 550 $\mu$m, and the BET specific surface area was 200 $cm^2/g$. In this regard, the three-dimensional network copper skeleton had cavities formed by removing the foam in the inside.

(b) Production of negative electrode

A negative electrode mixture slurry was prepared by mixing an artificial graphite powder serving as a negative electrode active material, acetylene black serving as a conductive assistant, PVDF serving as a binder, and NMP serving as a dispersion medium. The mass ratio of the graphite powder to acetylene black to PVDF was specified to be 90:5:5.

One end portion of a copper negative electrode lead was welded to the negative electrode current collector obtained in the above-described item (a). Thereafter, the negative electrode mixture slurry was filled into the negative electrode current collector by using a roller, and the dispersion medium was removed by drying. Subsequently, rolling was performed in the state of holding between a pair of rollers, so that a negative electrode having a thickness of 1.0 mm was formed. The porosity of the negative electrode after rolling was 34 percent by volume. The proportion of the negative electrode active material in the total mass of the negative electrode was calculated, resulting in 81 percent by mass.

(2) Assembly of lithium secondary battery

A lithium secondary battery was produced in the same manner as for Example 1 except that the negative electrode obtained in the above-described item (1) was used, and the discharge capacity was evaluated.

Example 3

A lithium secondary battery was produced in the same manner as for Example 1 except that a nonaqueous electrolyte, in which the concentration of LiTFSA was changed to 2 mol/L, was used, and the discharge capacity was evaluated.

The results of Examples 1 to 3 and Comparative example 1 are shown in Table 1.

[Table 1]

| | Thickness of positive electrode (mm) | Porosity of positive electrode (percent by volume) | Lithium salt concentration (mol/L) | Discharge capacity (mAh/g) |
|---|---|---|---|---|
| Example 1 | 1 | 35 | 3 | 119 |
| Example 2 | 1 | 35 | 3 | 120 |
| Example 3 | 1 | 35 | 2 | 119 |
| Comparative example 1 | 1 | 35 | 2 | 21 |

In Comparative example 1 by using the organic electrolytic solution, discharging was hardly able to be performed. On the other hand, as shown in Table 1, in Examples 1 to 3 by using the nonaqueous electrolyte containing the ionic liquid, high discharge capacities were obtained in spite of the large thickness of the positive electrode. The reason for this is considered that in the examples, ions sufficient for charging and discharging were able to be supplied because the nonaqueous electrolyte contained large amounts of ions.

Examples 4 and 5 and Comparative examples 2 and 3

A lithium secondary battery was produced in the same manner as for Example 1 except that a nonaqueous electrolyte, in which the concentration of LiTFSA was changed as shown in Table 2, was used, and the discharge capacity was evaluated. The results are shown in Table 2. The results of Example 3 and Comparative example 1 by using the organic electrolytic solution are also shown in Table 2.

[Table 2]

| | Lithium salt concentration (mol/L) | Discharge capacity (mAh/g) |
|---|---|---|
| Comparative example 2 | 0.5 | 45 |
| Example 4 | 1 | 117 |
| Example 3 | 2 | 119 |
| Example 5 | 6 | 115 |
| Comparative example 3 | 6.5 | 56 |
| Comparative example 1 | 2 | 21 |

In Examples 3 to 5, high discharge capacities were obtained as with Examples 1 and 2. In Comparative examples 2 and 3, the discharge capacities were high as compared with that in Comparative example 1 by using the organic electrolytic solution but were a half or less as compared with those in Examples 3 to 5. It is considered that the discharge capacities were reduced because the amount of lithium ions was too small in Comparative example 2 and the viscosity of the nonaqueous electrolyte was too high in Comparative example 3.

Examples 6 to 8 and Comparative example 4

The thickness of the positive electrode current collector used, the amount of filling of the positive electrode mixture slurry, and the pressure in the rolling were adjusted appropriately in such a way that the porosity of the positive electrode and the thickness of the positive electrode became the values shown in Table 3. Also, the thickness of the negative electrode was adjusted in the same manner as for the positive electrode. In this regard, the capacity of the negative electrode was adjusted to about 1.2 times the capacity of the positive electrode. A lithium secondary battery was produced in the same manner as for Example 1 except them, and the discharge capacity was evaluated.

Comparative example 5

A lithium secondary battery was produced in the same manner as for Example 8 except that the same organic electrolytic solution as the organic electrolytic solution used in Comparative example 1 was used in place of the nonaqueous electrolyte, and the discharge capacity was evaluated.

The results of Examples 6 to 8, Comparative example 4, and Comparative example 5 are shown in Table 3. The results of Comparative example 1 are also shown in Table 3.

[Table 3]

|  | Thickness of positive electrode (mm) | Porosity of positive electrode (percent by volume) | Lithium salt concentration (mol/L) | Discharge capacity (mAh/g) |
|---|---|---|---|---|
| Example 6 | 0.2 | 15 | 3 | 119 |
| Example 7 | 2 | 36 | 3 | 120 |
| Example 8 | 5 | 37 | 3 | 112 |
| Comparative example 5 | 5 | 37 | 2 | 6 |
| Comparative example 1 | 1 | 35 | 2 | 21 |
| Comparative example 4 | 6 | 39 | 3 | 91 |

As shown in Table 3, in Examples 6 to 8, even when the thickness of the positive electrode was changed to 0.2 mm, 2 mm, or 5 mm, a high capacity was obtained as with Examples 1 and 2. On the other hand, in Comparative example 4 in which the thickness of the positive electrode was 6 mm, reduction in the capacity was observed. Meanwhile, although the thickness of the positive electrode was 1 mm or 5 mm, the discharge capacity was reduced significantly in the case where the organic electrolytic solution was used (Comparative example 1, Comparative example 5).

Industrial Applicability

According to an embodiment of the present invention, the lithium battery (primary battery, secondary battery) having a high energy density is obtained. Such lithium batteries are useful for power supplies and the like for electric automobiles and hybrid automobiles besides main power supplies or backup power supplies for portable equipment.

Reference Signs List

101: cell-shaped hole of current collector, 102: metal skeleton of current collector, 102a: cavity in skeleton 102, $w_f$:

width of cavity 102a, 103: opening between cell-shaped holes, 104: mixture layer, $w_m$: thickness of mixture layer

1: separator, 2: positive electrode, 2a: positive electrode lead piece, 3: negative electrode, 3a: negative electrode lead piece, 7: nut, 8: flange portion, 9: washer, 10: battery case, 12: container main body, 13: lid body, 14: external positive electrode terminal, 16: safety valve

**Claims**

1. A lithium battery comprising a positive electrode, a negative electrode, a separator interposed between the positive electrode and the negative electrode, and a nonaqueous electrolyte,
   wherein the positive electrode includes a metal positive electrode current collector having a three-dimensional network hollow skeleton and a positive electrode mixture which is filled in the positive electrode current collector and which contains a positive electrode active material and the thickness of the positive electrode is 0.2 to 5 mm,
   the nonaqueous electrolyte contains an ionic liquid and a lithium salt,
   the ionic liquid is a molten salt of a cation and an anion, and
   the concentration of the lithium salt in the nonaqueous electrolyte is 0.8 to 6.2 mol/L.

2. The lithium battery according to Claim 1, wherein the porosity of the positive electrode is 10 to 40 percent by volume, and the proportion of the positive electrode active material in the total mass of the positive electrode is 60 to 95 percent by mass.

3. The lithium battery according to Claim 1 or Claim 2, wherein the proportion of the total amount of the ionic liquid and the lithium salt in the nonaqueous electrolyte is 80 percent by mass or more.

4. The lithium battery according to any one of Claim 1 to Claim 3, wherein the negative electrode includes a metal negative electrode current collector having a three-dimensional network hollow skeleton and a negative electrode mixture, which is filled in the negative electrode current collector and which contains a negative electrode active material, and the thickness of the negative electrode is 0.2 to 5 mm.

5. The lithium battery according to Claim 4, wherein the porosity of the negative electrode is 10 to 40 percent by volume, and the proportion of the negative electrode active material in the total mass of the negative electrode is 60 to 95 percent by mass.

6. The lithium battery according to any one of Claim 1 to Claim 5, wherein the amount of the nonaqueous electrolyte is 3 to 30 parts by mass relative to 100 parts by mass of the positive electrode active material.

7. The lithium battery according to any one of Claim 1 to Claim 6, wherein the cation constituting the ionic liquid is an organic cation and the anion is a bissulfonylamide anion.

8. The lithium battery according to any one of Claim 1 to Claim 7, wherein the lithium salt is a salt of a lithium ion and a bissulfonylamide anion.

FIG. 1

FIG. 2

FIG. 3

## INTERNATIONAL SEARCH REPORT

| | International application No. |
|---|---|
| | PCT/JP2014/060662 |

A.  CLASSIFICATION OF SUBJECT MATTER
*H01M10/052*(2010.01)i, *H01M4/13*(2010.01)i, *H01M4/80*(2006.01)i, *H01M10/0568*
(2010.01)i

According to International Patent Classification (IPC) or to both national classification and IPC

B.  FIELDS SEARCHED

Minimum documentation searched (classification system followed by classification symbols)
H01M10/052, H01M4/13, H01M4/80, H01M10/0568

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)
JSTPlus/JSTChina/JST7580(JDreamIII)

C.  DOCUMENTS CONSIDERED TO BE RELEVANT

| Category* | Citation of document, with indication, where appropriate, of the relevant passages | Relevant to claim No. |
|---|---|---|
| Y<br>A | JP 2012-255185 A  (Sumitomo Electric<br>Industries, Ltd.),<br>27 December 2012 (27.12.2012),<br>paragraphs [0001], [0042] to [0052]<br>(Family: none) | 1-6<br>7,8 |
| Y | WO 2013/061760 A1  (Sumitomo Electric<br>Industries, Ltd.),<br>02 May 2013 (02.05.2013),<br>paragraphs [0031], [0040], [0042]<br>(Family: none) | 1-6 |
| Y | JP 2004-273168 A  (Yuasa Corp.),<br>30 September 2004 (30.09.2004),<br>paragraphs [0042], [0044]<br>(Family: none) | 1-6 |

☐ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 July, 2014 (15.07.14) | 29 July, 2014 (29.07.14) |

| Name and mailing address of the ISA/<br>Japanese Patent Office | Authorized officer |
|---|---|
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010097922 A